(19)

Europäisches
Patentamt
European
Patent Office
Office européen
des brevets

(11) **EP 4 746 313 A1**

(12) **EUROPEAN PATENT APPLICATION**

(43) Date of publication:
**20.05.2026  Bulletin 2026/21**

(21) Application number: **25166606.1**

(22) Date of filing: **27.03.2025**

(51) International Patent Classification (IPC):
**H04B 7/185** (2006.01)

(52) Cooperative Patent Classification (CPC):
**H04B 7/18513; H04B 7/18543; H04L 1/0003;
H04L 1/0009; H04W 52/241**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.11.2024  TW 113144255**

(71) Applicant: **Industrial Technology Research
Institute
Hsinchu 31040 (TW)**

(72) Inventors:
• **Tseng, Hsin-Hsiang
New Taipei City 238032 (TW)**

• **Chen, Bo-Yan
Xihu Township, Changhua County 514007 (TW)**
• **Chen, Yung-Fang
Taoyuan City 320317 (TW)**
• **Cheng, Kai-Lun
Taoyuan City 320016 (TW)**
• **Liang, Ting-Jung
Hsinchu City 300041 (TW)**

(74) Representative: **Becker Kurig & Partner
Patentanwälte mbB
Bavariastraße 7
80336 München (DE)**

Remarks:
Amended claims in accordance with Rule 137(2)
EPC.

(54) **METHOD AND WIRELESS COMMUNICATION DEVICE OF CONFIGURING RADIO RESOURCE IN SATELLITE COMMUNICATION**

(57)    A method and a wireless communication device of configuring a radio resource in satellite communication. The method includes: a first channel matrix gain and a first noise gain are calculated according to precoding information and a first channel matrix (S802); a lookup table is obtained, and the lookup table includes mapping relationships among a modulation coding scheme, a spectral efficiency, and a required signal-to-noise ratio (S803); a first power change for increasing a first spectral efficiency of a first baseband data stream of a first user equipment and a second power change for increasing a second spectral efficiency of a second baseband data stream of the first user equipment are calculated (S804); and in response to the first power change being less than the second power change, a first modulation coding scheme corresponding to the first baseband data stream of the first user equipment is updated (S805).

Obtain precoding information for hybrid beamforming and a first channel matrix corresponding to a first user equipment (UE) — S801

Calculate a first channel matrix gain and a first noise gain according to the precoding information and the first channel matrix — S802

Obtain a lookup table, which includes mapping relationships among a modulation coding scheme (MCS), a spectral efficiency, and a required signal-to-noise ratio — S803

Calculate a first power change for increasing a first spectral efficiency of a first baseband data stream signal of the first UE and a second power change for increasing a second spectral efficiency of a second baseband data stream signal of the first UE according to the first channel matrix gain, the first noise gain, and the lookup table — S804

In response to the first power change being less than the second power change, update a first MCS corresponding to the first baseband data stream signal of the first UE — S805

FIG. 8

EP 4 746 313 A1

**Description**

TECHNICAL FIELD

The disclosure relates to a wireless communication technology, and the technical field relates to a method and a wireless communication device of configuring a radio resource in satellite communication.

BACKGROUND

When a user terminal (UT) communicates with a satellite, if merely one data stream is used for communication between the UT and the satellite, higher-order modulation methods such as 32 amplitude phase shift keying (APSK) may need to be used to maintain the required data transmission rate, error rate, or quality of service (QoS). However, using higher-order modulation significantly increases the total transmission power of the satellite. Therefore, how to reduce the transmission power of the satellite while maintaining the required data transmission rate is one of the important issues in the field.

SUMMARY

The disclosure provides a method and a wireless communication device of configuring a radio resource in satellite communication, which may save power consumption of a satellite communication system.

A method of configuring a radio resource in satellite communication according to the disclosure includes: precoding information for hybrid beamforming and a first channel matrix corresponding to a first user equipment (UE) are obtained; a first channel matrix gain and a first noise gain are calculated according to the precoding information and the first channel matrix; a lookup table is obtained, and the lookup table includes mapping relationships among a modulation coding scheme (MCS), a spectral efficiency, and a required signal-to-noise ratio (SNR); a first power change for increasing a first spectral efficiency of a first baseband data stream signal of the first UE and a second power change for increasing a second spectral efficiency of a second baseband data stream signal of the first UE are calculated according to the first channel matrix gain, the first noise gain, and the lookup table; and in response to the first power change being less than the second power change, a first MCS corresponding to the first baseband data stream signal of the first UE is updated.

In an embodiment of the disclosure, the step of updating the first MCS corresponding to the first baseband data stream signal of the first UE includes: a first spectral efficiency corresponding to the first baseband data stream signal of the first UE is increased.

In an embodiment of the disclosure, the method further includes: a sum of multiple spectral efficiencies is calculated, in which the spectral efficiencies respectively correspond to multiple baseband data stream signals of the first UE; and in response to the sum reaching a preset value, an update of multiple MCS respectively corresponding to the baseband data stream signals is stopped.

In an embodiment of the disclosure, the precoding information includes a digital precoder and an analog precoder of a satellite, and includes a digital precoder and an analog precoder of the first UE.

In an embodiment of the disclosure, the method further includes: at least one baseband data stream signal is allocated for each of UE, in which the UE includes the first UE, and the at least one baseband data stream signal includes the first baseband data stream signal; singular value decomposition is performed on multiple equivalent channel matrices respectively to obtain a singular value set, in which the equivalent channel matrices respectively correspond to the UE; multiple maximum singular values respectively corresponding to the equivalent channel matrices are removed from the singular value set to update the singular value set; and a second baseband data stream signal is allocated for the first UE according to the updated singular value set.

In an embodiment of the disclosure, the step of allocating the second baseband data stream signal for the first UE according to the updated singular value set includes: multiple maximum singular values respectively corresponding to the UE are selected from the updated singular value set; whether a first singular value corresponding to the first UE is determined to be the smallest among the selected maximum singular values; in response to determining that the first singular value is the smallest, the second baseband data stream signal is allocated for the first UE; and the first singular value is removed from the singular value set to update the singular value set.

In an embodiment of the disclosure, the method further includes: the number of baseband data streams $n_{s,u}$ allocated to the first UE is determined according to the singular value set, where $n_{s,u}$ is a positive integer; an equivalent channel matrix is calculated according to the analog precoder of the first UE and the first channel matrix; singular value decomposition is performed on the equivalent channel matrix to obtain the first $n_{s,u}$ right singular vectors; and the analog precoder of the satellite is generated according to the first $n_{s,u}$ right singular vectors.

In an embodiment of the disclosure, the method further includes: singular value decomposition is performed on the first channel matrix to obtain the first $N_{rRF}$ left singular vectors, where $N_{rRF}$ is a positive integer; and the analog precoder of the first UE is generated according to the first $N_{rRF}$ left singular vectors.

In an embodiment of the disclosure, the precoding information includes the analog precoder of the satellite and the analog precoder of the first UE, and the method further includes: a first equivalent channel matrix is calculated according to the first channel, the analog precoder of the satellite, and the analog precoder of the first UE; singular value decomposition is performed on the equivalent channel matrix to obtain the first $n_{s,u}$ left singular vectors, where $n_{s,u}$ is the number of baseband data stream signals allocated to the first UE, and $n_{s,u}$ is a positive integer; and a digital precoder of second UE is generated according to the first $n_{s,u}$ left singular vectors.

In an embodiment of the disclosure, the step of generating the digital precoder of the second UE according to the first $n_{s,u}$ left singular vectors includes: a second equivalent channel matrix is generated according to the first $n_{s,u}$ left singular vectors and the first equivalent channel matrix; a third equivalent channel matrix is generated, in which the third equivalent channel matrix includes multiple equivalent channel matrices different from a fourth equivalent channel matrix, and the fourth equivalent channel matrix corresponds to the second UE; singular value decomposition is performed on the third equivalent channel matrix to obtain the last ($N_{tRF}$ - $rank(\overline{\overline{H}}_u)$) right singular vectors, where $N_{tRF}$ is the number of radio frequency chains (RF chains) of the satellite, and $rank(\overline{\overline{H}}_u)$ is the rank of the third equivalent channel matrix; a fifth equivalent channel matrix is generated according to the last ($N_{tRF} - rank(\overline{\overline{H}}_u)$) right singular vectors and the second equivalent channel matrix; the singular value decomposition is performed on the fifth equivalent channel matrix to obtain the first $n_{s,u}$ second left singular vectors, where $n_{s,u}$ is the number of baseband data stream signals allocated to the first UE, and $n_{s,u}$ is a positive integer; and the digital precoder of the second UE is generated according to the first $n_{s,u}$ left singular vectors and the first $n_{s,u}$ second left singular vectors.

In an embodiment of the disclosure, the method further includes: singular value decomposition is performed on the fifth equivalent channel matrix to obtain the first $n_{s,u}$ right singular vectors; and the digital precoder of the satellite is generated according to the last ($N_{tRF}$ - $rank(\overline{\overline{H}}_u)$) right singular vectors and the first $n_{s,u}$ right singular vectors.

A wireless communication device of configuring a radio resource in satellite communication disclosed in the disclosure includes a processor, a digital precoding circuit, multiple radio frequency chains (RF chains), and an analog precoding circuit. The digital precoding circuit is coupled to the processor. The RF chains are coupled to the digital precoding circuit. The analog precoding circuit is coupled to the RF chains, and the processor is configured to execute: obtaining precoding information for hybrid beamforming and a first channel matrix corresponding to a first user equipment (UE); calculating a first channel matrix gain and a first noise gain according to the precoding information and the first channel matrix; obtaining a lookup table, in which the lookup table includes mapping relationships among a modulation coding scheme (MCS), a spectral efficiency, and a required signal-to-noise ratio (SNR); calculating a first power change for increasing a first spectral efficiency of a first baseband data stream signal of the first UE and a second power change for increasing a second spectral efficiency of a second baseband data stream signal of the first UE according to the first channel matrix gain, the first noise gain, and the lookup table; and in response to the first power change being less than the second power change, updating a first MCS corresponding to the first baseband data stream signal of the first UE.

In an embodiment of the disclosure, the wireless communication device includes one of the satellite and the first UE.

Based on the above, the disclosure may minimize the transmission power of the satellite communication system while satisfying the quality of service (QoS) requirements of each of the UE.

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

BRIEF DESCRIPTION OF THE DRAWINGS

The accompanying drawings are included to provide a further understanding, and are incorporated in and constitute a part of this specification. The drawings illustrate exemplary embodiments and, together with the description, serve to explain the principles of the disclosure.

FIG. 1 illustrates a schematic diagram of a satellite communication system according to an embodiment of the disclosure.

FIG. 2 illustrates a flowchart of a method of configuring a radio resource in satellite communication according to an embodiment of the disclosure.

FIG. 3 illustrates a schematic diagram of an algorithm for generating an analog precoder and the number of baseband data stream signals according to an embodiment of the disclosure.

FIG. 4 illustrates a schematic diagram of a singular value set according to an embodiment of the disclosure.

FIG. 5 illustrates a schematic diagram of an algorithm for generating a digital precoder according to an embodiment of the disclosure.

FIG. 6 illustrates a schematic diagram of an algorithm for configuring a modulation coding scheme according to an embodiment of the disclosure.

FIG. 7 illustrates simulation results of wireless communication performance according to an embodiment of the disclosure.

FIG. 8 illustrates a flowchart of a method of configuring a radio resource in satellite communication according to an embodiment of the disclosure.

DETAILED DESCRIPTION OF DISCLOSURED EMBODIMENTS

In order to reduce the total transmission power of a satellite serving multiple user equipments (UE) or UT, multiple data streams may be used for communication between one UE and the satellite. Since the number of data streams that can be supported by the satellite is limited, a satellite communication system needs to determine how to allocate the number of data streams to each of the UE and configure appropriate modulation coding schemes (MCS) for the data streams. If the resources of data streams can be properly allocated, the total transmission power of the satellite can be significantly reduced. The disclosure may configure one or more baseband data streams for UE and configure the appropriate MCS for each of baseband data streams, thereby reducing the total transmission power of the satellite. Experiments show that the method of the disclosure may reduce the total transmission power of the satellite by approximately 20%.

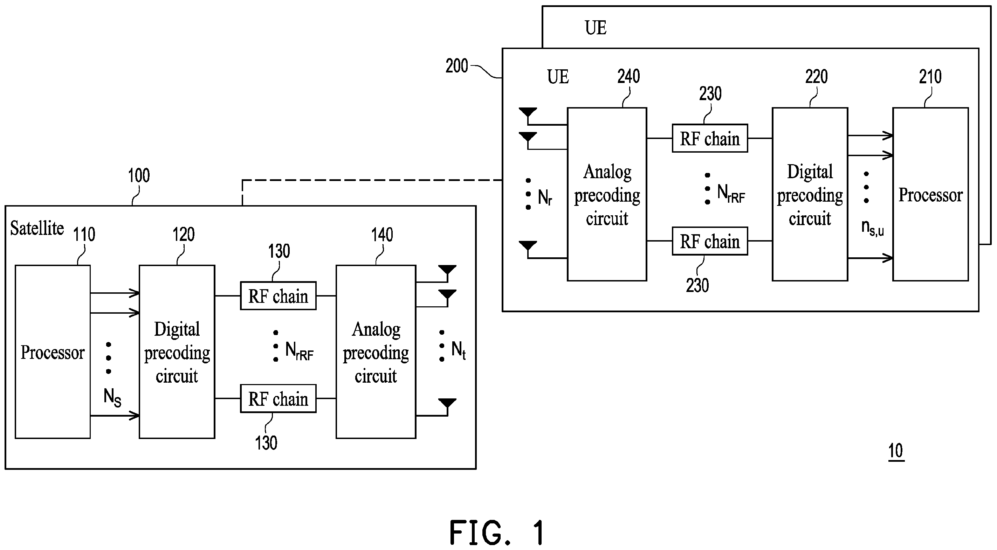

FIG. 1 illustrates a schematic diagram of a satellite communication system 10 according to an embodiment of the disclosure. The satellite communication system 10 may include a satellite 100 and one or more UE (or UT) 200 served by the satellite 100, in which the satellite 100 may be in communication connection with the UE 200. The satellite 100 or UE 200 has a hardware structure that may be used to implement hybrid beamforming.

The satellite 100 may include a processor 110, a digital precoding circuit 120, $N_{tRF}$ radio frequency chains (RF chains) 130, and an analog precoding circuit 140.

The processor 110 may be, for example, a communication chip, a central processing unit (CPU), or other programmable general-purpose or special-purpose micro control units (MCUs), microprocessors, digital signal processors (DSPs), programmable controllers, or application specific integrated circuits (ASICs). The processor 110 may be coupled to the digital precoding circuit 120, and transmit $N_S$ baseband data streams to the digital precoding circuit 120 or receive $N_S$ baseband data streams from the digital precoding circuit 120. $N_S = n_{s,1} + n_{s,2} + \cdots + n_{s,U}$, where $U$ is the total number of the UE 200, and $n_{s,u}$ is the number of baseband data streams allocated to the u-th UE 200, where $n_{s,u}$ is a positive integer.

The digital precoding circuit 120 may be used to implement the function of a digital precoder, and may convert $N_S$ baseband data stream signals and $N_{tRF}$ digital baseband signals to and from each other (for example, converting $N_S$ baseband data stream signals into $N_{tRF}$ digital baseband signals), where $N_S \leq N_{tRF}$, and $N_{tRF}$ is a positive integer. The digital precoding circuit 120 may be coupled to $N_{tRF}$ RF chains 130, and transmit $N_{tRF}$ digital baseband signals to $N_{tRF}$ RF chains 130 or receive $N_{tRF}$ digital baseband signals from $N_{tRF}$ RF chains 130.

The RF chain 130 may include elements such as a digital-to-analog converter, an analog-to-digital converter, a mixer, a filter, or a power amplifier. The RF chain 130 may convert $N_{tRF}$ digital baseband signals and $N_{tRF}$ radio frequency signals to and from each other.

The analog precoding circuit 140 may be coupled to $N_{tRF}$ RF chains 130. The analog precoding circuit 140 may include, for example, a phased array antenna with $Nt$ antenna units, where $N_S \leq N_{tRF} \ll N_t$. The analog precoding circuit 140 may be used to implement the function of an analog precoder, and may convert $N_{tRF}$ radio frequency signals and $N_t$ radio frequency signals to and from each other (for example, converting $N_{tRF}$ radio frequency signals into $N_t$ radio frequency signals). In an embodiment, the phased array antenna may be a uniform linear array (ULA) antenna, and $Nt$ antenna units are equally spaced and arranged in a straight line. In an embodiment, the phased array antenna may be a uniform planar array (UPA) antenna, and $Nt$ antenna units are equally spaced and arranged in a plane.

The UE 200 may include a processor 210, a digital precoding circuit 220, $N_{rRF}$ RF chains 230, and an analog precoding circuit 240.

The processor 210 may be, for example, a communication chip, CPU, or other programmable general-purpose or special-purpose MCUs, microprocessors, DSPs, programmable controllers, or ASICs. The processor 210 may be coupled to the digital precoding circuit 220, and transmit $n_{s,u}$ baseband data stream signals to the digital precoding circuit 220 or receive $n_{s,u}$ baseband data stream signals from the digital precoding circuit 220, where $n_{s,u}$ represents the number of baseband data streams corresponding to the u-th UE 200, and $n_{s,u}$ is a positive integer.

The digital precoding circuit 220 may be used to implement the function of a digital precoder, and may convert $n_{s,u}$

baseband data stream signals and $N_{rRF}$ digital baseband signals to and from each other (for example, converting $N_{rRF}$ digital baseband signals into $n_{s,u}$ baseband data stream signals), where $n_{s,u} \leq N_{rRF}$, and $N_{rRF}$ is a positive integer. The digital precoding circuit 220 may be coupled to $N_{rRF}$ RF chains 230, and transmit $N_{rRF}$ digital baseband signals to $N_{rRF}$ RF chains 230 or receive $N_{rRF}$ digital baseband signals from $N_{rRF}$ RF chains 230.

The RF chain 230 may include elements such as a digital-to-analog converter, an analog-to-digital converter, a mixer, a filter, or a power amplifier. The RF chain 230 may convert $N_{rRF}$ digital baseband signals and $N_{rRF}$ radio frequency signals to and from each other.

The analog precoding circuit 240 may be coupled to $N_{rRF}$ RF chains 230. The analog precoding circuit 240 may include, for example, a phased array antenna with $N_r$ antenna units, where $n_{s,u} \leq N_{rRF} \ll N_r$. The analog precoding circuit 240 may be used to implement the function of an analog precoder, and may convert $N_{rRF}$ radio frequency signals and $N_r$ radio frequency signals to and from each other (for example, converting $N_{rRF}$ radio frequency signals into $N_r$ radio frequency signals).

The wireless communication device of the disclosure may configure the digital precoding circuit 120, analog precoding circuit 140, digital precoding circuit 220, or analog precoding circuit 240 as appropriate precoders to eliminate inter-interference between the UE 200 and intra-interference between the baseband data streams. The wireless communication device may allocate the number of baseband data streams for each of the UE and may configure an appropriate MCS for each of the baseband data streams to reduce the total transmission power of the satellite 100. The aforementioned wireless communication device may include, but is not limited to, the satellite 100 or UE 200. For example, in addition to the satellite 100 and UE 200, the satellite communication system 10 may include other computing devices for executing the method of the disclosure. Table 1 shows the notations used in the embodiments of the disclosure.

Table 1

| | |
|---|---|
| $N_t$ | Number of antennas of satellite 100, where $N_t \gg N_{tRF} \geq N_S$ |
| $N_{tRF}$ | Number of RF chains 130 of satellite 100 |
| $N_S$ | Total number of baseband data stream signals of satellite 100, where $N_S = n_{s,1} + n_{s,2} + \cdots + n_{s,u}$ |
| $U$ | Number of UE 200 served by satellite 100 |
| $N_r$ | Number of antennas of UE 200, where $N_r \gg N_{rRF} \geq n_{s,u}$ |
| $n_{s,u}$ | Number of baseband data stream signals of the u-th UE 200 |
| $\boldsymbol{W}_{RFu} \in \mathbb{C}^{N_r \times N_{rRF}}$ | Analog precoder of the u-th UE 200 |
| $\boldsymbol{W}_{BBu} \in \mathbb{C}^{N_{rRF} \times n_{s,u}}$ | Digital precoder of the u-th UE 200 |
| $\boldsymbol{F}_{RF} \in \mathbb{C}^{N_t \times N_{tRF}}$ | Analog precoder of satellite 100 |
| $\boldsymbol{F}_{BB} \in \mathbb{C}^{N_{tRF} \times N_S}$ | Digital precoder of satellite 100 |
| $\boldsymbol{H}_u \in \mathbb{C}^{N_r \times N_t}$ | Channel matrix between the u-th UE 200 and satellite 100 |
| $\boldsymbol{z}_u \in \mathbb{C}^{N_r \times 1}$ | Complex additive white Gaussian noise (AWGN) with power $\overline{\sigma_n^2}$ |

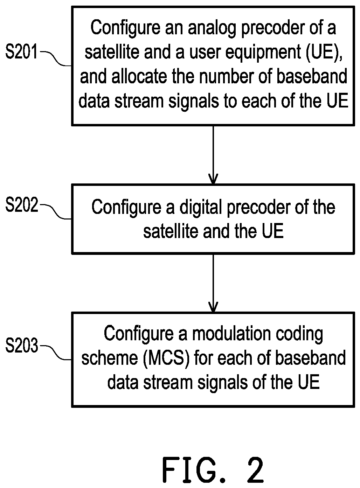

FIG. 2 illustrates a flowchart of a method of configuring a radio resource in satellite communication according to an embodiment of the disclosure, in which the method may be implemented by the wireless communication device of the disclosure.

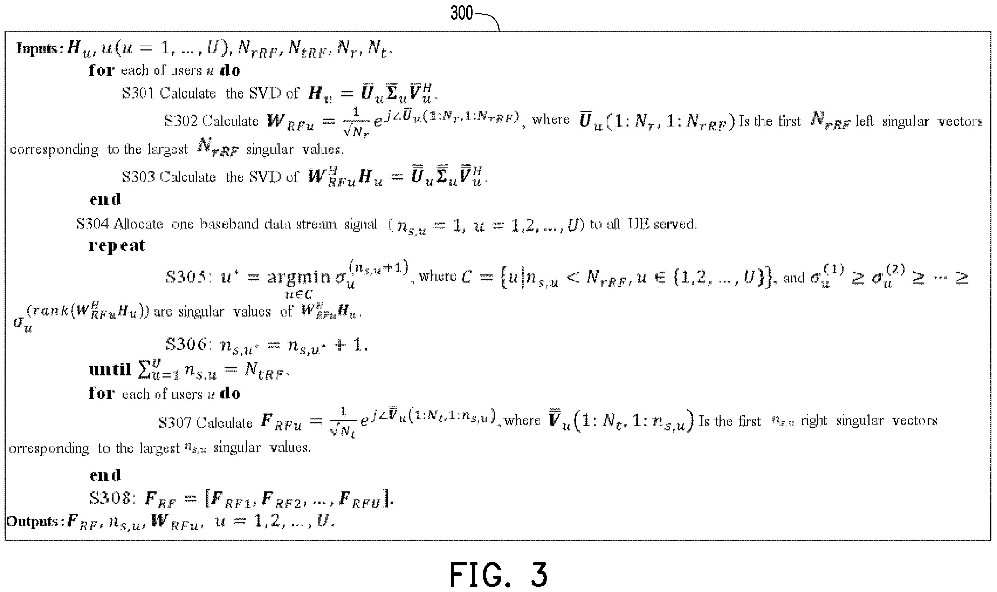

In step S201, the wireless communication device may configure an analog precoder $\boldsymbol{F}_{RF}$ of the satellite 100 and an analog precoder $\boldsymbol{W}_{RFu}$ of a user u corresponding to the u-th UE 200 (or referred to as the user u) according to a channel matrix $\boldsymbol{H}_u$, without considering noise or interference, and allocate the number of baseband data stream signals $n_{s,u}$ for each of the UE 200. The wireless communication device may execute an algorithm 300 as shown in FIG. 3 to complete step S201.

In step S202, the wireless communication device may configure a digital precoder $\boldsymbol{F}_{BB}$ of the satellite 100 and a digital precoder $\boldsymbol{W}_{BBu}$ of the user u according to parameters such as the channel matrix $\boldsymbol{H}_u$, the analog precoder $\boldsymbol{W}_{RFu}$, and the number of baseband data stream signals $n_{s,u}$, to eliminate inter-interference between the UE 200 and intra-interference between the baseband data stream signals.

In step S203, the wireless communication device may configure the MCS for each of baseband data stream signals of the user u to reduce the total transmission power of the satellite 100. In an embodiment, the wireless communication device may obtain and store a lookup table, and configure the MCS for the baseband data stream according to the lookup table, and the lookup table may include mapping relationships among the MCS and an index thereof, a spectral efficiency, and a required signal-to-noise ratio (SNR). Table 2 is an example of the lookup table. The types of MCS may include, but are not limited to, quaternary phase shift keying (QPSK) modulation, 8 phase shift keying (8PSK) modulation, 16APSK or 32APSK, where r represents the coding rate. When the value of the MCS index increases, it indicates that the spectral efficiency of the MCS increases, and also indicates that the required SNR to achieve the expected frame error rate (FER) using the MCS increases.

Table 2

| MCS index | MCS | Spectral efficiency (bps/Hz) | Required SNR at FER=10$^{-5}$ |
| --- | --- | --- | --- |
| 1 | QPSK, r=1/4 | 0.5 | -2.19 |
| 2 | QPSK, r=2/5 | 0.8 | -0.22 |
| 3 | QPSK, r=1/2 | 1 | 1.12 |
| 4 | QPSK, r=2/3 | 1.33 | 3.26 |
| 5 | QPSK, r=4/5 | 1.6 | 4.81 |
| 6 | 8PSK, r=2/3 | 2 | 6.76 |
| 7 | 8PSK, r=5/6 | 2.5 | 9.57 |
| 8 | 16APSK, r=3/4 | 3.0 | 10.43 |
| 9 | 16APSK, r=5/6 | 3.33 | 11.86 |
| 10 | 32APSK, r=3/4 | 3.75 | 13.11 |

FIG. 3 illustrates a schematic diagram of the algorithm 300 for generating an analog precoder and the number of baseband data stream signals according to an embodiment of the disclosure. Before executing the algorithm 300, the wireless communication device may obtain information such as the number of antennas $N_t$ of the satellite 100, the number of antennas $N_r$ of the user u, the number of RF chains $N_{tRF}$ of the satellite 100, and the number of RF chains $N_{rRF}$ of the user u. The wireless communication device may also measure or obtain the channel matrix $\boldsymbol{H}_u$ between the user u and the satellite 100. Next, the wireless communication device may iteratively execute step S301 to step S303 to generate the analog precoder $\boldsymbol{W}_{RFu}$ for each of the users u, and may perform singular value decomposition of $\boldsymbol{W}_{RFu}^H \boldsymbol{H}_u$ for each of the users u.

Specifically, in step S301, the wireless communication device may perform singular value decomposition the (SVD) on the channel matrix $\boldsymbol{H}_u$ of the user u: $\boldsymbol{H}_u = \overline{\boldsymbol{U}}_u \overline{\boldsymbol{\Sigma}}_u \overline{\boldsymbol{V}}_u^H$, where $u = 1,2, ..., U$, $\overline{\boldsymbol{U}}_u$ is the matrix of left singular vectors, $\overline{\boldsymbol{\Sigma}}_u$ is the diagonal matrix, and $\boldsymbol{V}_u$ is the matrix of right singular vectors.

In step S302, the wireless communication device may generate the analog precoder (or analog combiner) $\boldsymbol{W}_{RFu} = \frac{1}{\sqrt{N_r}} e^{j\angle \overline{\boldsymbol{U}}_u(1:N_r, 1:N_{rRF})}$ for the user u, where $1: N_r$ indicates the first to $N_r$th rows of the matrix $\overline{\boldsymbol{U}}_u$, $1: N_{rRF}$ indicates the first to $N_{rRF}$th columns of the matrix $\overline{\boldsymbol{U}}_u$, and $\overline{\boldsymbol{U}}_u(1: N_r, 1: N_{rRF})$ represents the first $N_{rRF}$ left singular vectors corresponding to the largest $N_{rRF}$ singular values.

In step S303, the wireless communication device may generate an equivalent channel matrix $\boldsymbol{W}_{RFu}^H \boldsymbol{H}_u \in \mathbb{C}^{N_{rRF} \times N_t}$ based on the analog precoder $\boldsymbol{W}_{RFu}$ and the channel matrix $\boldsymbol{H}_u$, and perform singular value decomposition on $\boldsymbol{W}_{RFu}^H \boldsymbol{H}_u$: $\boldsymbol{W}_{RFu}^H \boldsymbol{H}_u = \overline{\overline{\boldsymbol{U}}}_u \overline{\overline{\boldsymbol{\Sigma}}}_u \overline{\overline{\boldsymbol{V}}}_u^H$, where $\overline{\overline{\boldsymbol{U}}}_u$ is the matrix of left singular vectors, $\overline{\overline{\boldsymbol{\Sigma}}}_u$ is the diagonal matrix, and $\overline{\overline{\boldsymbol{V}}}_u$ is the matrix of right singular vectors.

After completing the singular value decomposition of step S303 for each of the users u (i.e., U users), the wireless communication device may obtain a singular value set corresponding to the equivalent channel matrix $\boldsymbol{W}_{RFu}^H \boldsymbol{H}_u$ (for

example, a set of diagonal elements of $\overline{\overline{\Sigma}}_u$), where the singular value set may include all singular values $\sigma_u^{(i)}$ of each of the users, where $i = 1, 2, \ldots, rank(\boldsymbol{W}_{RFu}^H \boldsymbol{H}_u)$ is the index of singular values, $u = 1, 2, \ldots, U$ is the index of users, and $rank(\boldsymbol{W}_{RFu}^H \boldsymbol{H}_u)$ is the rank of the equivalent channel matrix $\boldsymbol{W}_{RFu}^H \boldsymbol{H}_u$, where $\sigma_u^{(1)} \geq \sigma_u^{(2)} \geq \geq \cdots \geq \sigma_u^{\left(rank(\boldsymbol{W}_{RFu}^H \boldsymbol{H}_u)\right)}$.

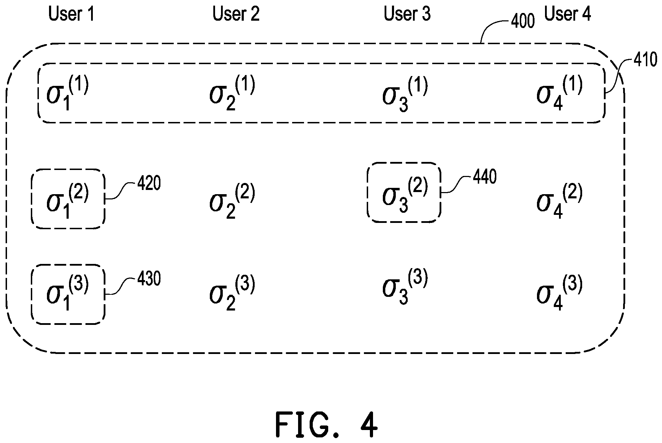

For example, assuming the number of users U = 4, the number of RF chains $N_{tRF}$ = 7 for the satellite 100, and the number of RF chains $N_{rRF}$ = 3 for each of the users. After completing step S301 for the first user, the wireless communication device may obtain the singular values $\sigma_1^{(1)}, \sigma_1^{(2)}$, and $\sigma_1^{(3)}$ of the first user, where $\sigma_1^{(1)}, \sigma_1^{(2)}$, and $\sigma_1^{(3)}$ are the diagonal elements of the diagonal matrix $\overline{\Sigma}_1$. In a similar manner, the wireless communication device may obtain the singular values $\sigma_2^{(1)}, \sigma_2^{(2)}$, and $\sigma_2^{(3)}$ of the second user, the singular values $\sigma_3^{(1)}, \sigma_3^{(2)}$, and $\sigma_3^{(3)}$ of the third user, and the singular values $\sigma_4^{(1)}, \sigma_4^{(2)}$, and $\sigma_4^{(3)}$ of the fourth user, thereby obtaining a singular value set 400 as shown in FIG. 4.

In step S304, the wireless communication device may allocate one baseband data stream signal ($n_{s,u}$ = 1, u = 1, 2, ..., U) to each of the users to ensure that each of the users can be served by the satellite 100, where $n_{s,u}$ is the number of baseband data stream signals allocated to the user u. For each of the users u or each of the channel matrices $\boldsymbol{H}_u$, the wireless communication device may remove the maximum singular value $\sigma_j^{(1)}$ (j = 1, 2, ..., U) corresponding to the channel matrix $\boldsymbol{H}_u$ from the singular value set to update the singular value set. In subsequent steps, the wireless communication device may allocate one or more additional baseband data stream signals to one or more users according to the updated singular value set.

Taking FIG. 4 as an example, the wireless communication device may allocate one baseband data stream signal ($n_{s,1}$ = 1, $n_{s,2}$ = 1, $n_{s,3}$ = 1, $n_{s,4}$ = 1) to each of users 1 to 4, and may remove a singular value subset 410 from the singular value set 400, in which the singular value subset 410 may include the maximum singular value $\sigma_1^{(1)}$ of the user 1, the maximum singular value $\sigma_2^{(1)}$ of the user 2, the maximum singular value $\sigma_3^{(1)}$ of the user 3, and the maximum singular value $\sigma_4^{(1)}$ of the user 4.

In step S305, the wireless communication device may select multiple maximum singular values corresponding to multiple users from the updated singular value set, and determine whether a singular value $\sigma_u^{(n_{s,u^*}+1)}$ corresponding to a user $u^*$ is the smallest among the selected maximum singular values. If the singular value $\sigma_u^{(n_{s,u^*}+1)}$ is the smallest among the selected maximum singular values, the wireless communication device may select the user $u^*$, as shown in equation (1), where the number of baseband data stream signals $n_{s,u^*}$ currently allocated to the user $u^*$ needs to be less than $N_{rRF}$, and $\sigma_u^{(1)} \geq \sigma_u^{(2)} \geq \cdots \geq \sigma_u^{(rank(\boldsymbol{W}_{RFu}^H \boldsymbol{H}_u))}$ are multiple singular values of the equivalent channel matrix $\boldsymbol{W}_{RFu}^H \boldsymbol{H}_u$.

$$u^* = \underset{u \in C}{\operatorname{argmin}} \, \sigma_u^{(n_{s,u}+1)}, C = \left\{ u \middle| n_{s,u} < N_{rRF}, u \in \{1, 2, \ldots, U\} \right\} \quad (1)$$

In step S306, the wireless communication device may allocate an additional baseband data stream signal ($n_{s,u^*}$ = $n_{s,u^*}$ + 1) to the selected user (i.e., the user $u^*$), and may remove the singular value $\sigma_u^{(n_{s,u^*}+1)}$ corresponding to the additional baseband data stream signal from the singular value set to update the singular value set.

The wireless communication device may repeatedly execute steps S305 to S306 to allocate additional baseband data stream signals to each of the users until the number of allocated baseband data stream signals reaches the upper limit $N_{tRF}$ of the number of baseband data stream signals that can be provided by the satellite 100 ( $\sum_{u=1}^{U} n_{s,u} = N_{tRF}$ ). In other words, the wireless communication device may determine the number of baseband data stream signals $n_{s,u}$ allocated to the user u according to the singular value set. Users with poorer channel quality may be allocated more baseband data stream signals to ensure that the quality of service for the users meets the user requirements.

Taking FIG. 4 as an example, after removing the singular value subset 410 from the singular value set 400, the wireless communication device may select multiple maximum singular values $\sigma_1^{(2)}, \sigma_2^{(2)}, \sigma_3^{(2)}$ , and $\sigma_4^{(2)}$ corresponding to the user 1, the user 2, the user 3, and the user 4, respectively, from the updated singular value set 400. It is worth noting that since the singular values $\sigma_1^{(1)}, \sigma_2^{(1)}, \sigma_3^{(1)}$ , and $\sigma_4^{(1)}$ have all been removed from the singular value set 400, the current maximum singular values in the singular value set 400 corresponding to the user 1, the user 2, the user 3, and the user 4 are $\sigma_1^{(2)}, \sigma_2^{(2)}, \sigma_3^{(2)}$ , and $\sigma_4^{(2)}$ , respectively. The wireless communication device may select the smallest one from the selected maximum singular values. If the singular value $\sigma_1^{(2)}$ of the user 1 is the smallest singular value 420 among $\left\{ \sigma_1^{(2)} \ \sigma_2^{(2)} \ \sigma_3^{(2)} \ \sigma_4^{(2)} \right\}$ , the wireless communication device may allocate an additional baseband data stream signal ($n_{s,1} = 2$, $n_{s,2} = 1$, $n_{s,3} = 1$, $n_{s,4} = 1$) to the user 1, and may remove the singular value 420 from the singular value set 400 to update the singular value set 400.

After removing the singular value subset 410 and the singular value 420 from the singular value set 400, the wireless communication device may select multiple maximum singular values $\sigma_1^{(3)}, \sigma_2^{(2)}, \sigma_3^{(2)}$ , and $\sigma_4^{(2)}$ corresponding to the user 1, the user 2, the user 3, and the user 4, respectively, from the updated singular value set 400. It is worth noting that since the singular values $\sigma_1^{(1)}$ and $\sigma_1^{(2)}$ of the user 1 have both been removed from the singular value set 400, the current maximum singular value corresponding to the user 1 in the singular value set 400 is $\sigma_1^{(3)}$ . The wireless communication device may select the smallest one from the selected maximum singular values. If the singular value $\sigma_1^{(3)}$ of the user 1 is the smallest singular value 430 among $\left\{ \sigma_1^{(3)} \ \sigma_2^{(2)} \ \sigma_3^{(2)} \ \sigma_4^{(2)} \right\}$ , the wireless communication device may allocate an additional baseband data stream signal ($n_{s,1} = 3$, $n_{s,2} = 1$, $n_{s,3} = 1$, $n_{s,4} = 1$) to the user 1, and may remove the singular value 430 from the singular value set 400 to update the singular value set 400.

After removing the singular value subset 410, the singular value 420, and the singular value 430 from the singular value set 400, the wireless communication device may select multiple maximum singular values $\sigma_2^{(2)}, \sigma_3^{(2)}$ , and $\sigma_4^{(2)}$ corresponding to the user 2, the user 3, and the user 4, respectively, from the updated singular value set 400. The wireless communication device may select the smallest one from the selected maximum singular values. If the singular value $\sigma_3^{(2)}$ of the user 3 is the smallest singular value 440 among $\left\{ \sigma_2^{(2)} \ \sigma_3^{(2)} \ \sigma_4^{(2)} \right\}$ , the wireless communication device may allocate an additional baseband data stream signal ($n_{s,1} = 3$, $n_{s,2} = 1$, $n_{s,3} = 2$, $n_{s,4} = 1$) to the user 3, and may remove the singular value 440 from the singular value set 400 to update the singular value set 400. After the number of allocated baseband data stream signals reaches $N_{tRF} = 7$, the wireless communication device may stop executing steps S305 and S306, and then execute step S307.

In step S307, the wireless communication device may generate an analog precoding matrix $F_{RFu} = \frac{1}{\sqrt{N_t}} e^{j\angle \overline{\overline{V}}_u(1:N_t,1:n_{s,u})}$ for the user u of the satellite 100, where 1: $Nt$ indicates the first to the $N_t$ th columns of a matrix $\overline{\overline{V}}_u$ , 1: $n_{s,u}$ indicates the first to the $n_{s,u}$ th rows of the matrix $\overline{\overline{V}}_u$ , and $\overline{\overline{V}}_u\left(1:N_t, 1:n_{s,u}\right)$ represents the first $n_{s,u}$ right singular vectors corresponding to the largest $n_{s,u}$ singular values.

After generating U analog precoding matrices $F_{RF1}$ to $F_{RFU}$ for users 1 to U, respectively, for the satellite 100, in step S308, the wireless communication device may combine U analog precoding matrices into an analog precoder $F_{RF} =$

[$\boldsymbol{F}_{RF1}$, $\boldsymbol{F}_{RF2}$, ... , $\boldsymbol{F}_{RFU}$] for the satellite 100.

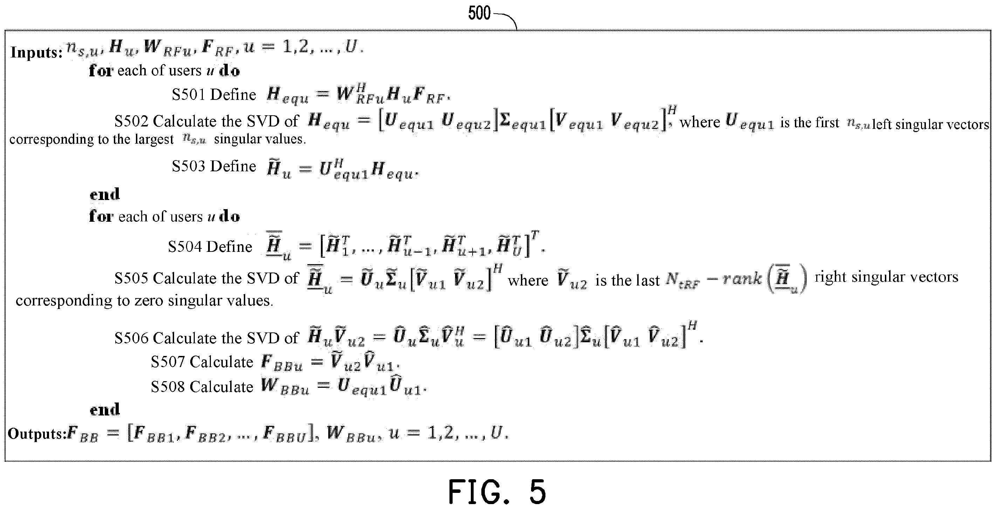

FIG. 5 illustrates a schematic diagram of an algorithm 500 for generating a digital precoder according to an embodiment of the disclosure. Before executing the algorithm 500, the wireless communication device may obtain a channel matrix $\boldsymbol{H}_u$ corresponding to a user u (u = 1,2, ..., U), the number of baseband data stream signals $n_{s,u}$, and an analog precoder $\boldsymbol{W}_{RFu}$, and may obtain an analog precoder $\boldsymbol{F}_{RF}$ of the satellite 100. The wireless communication device may iteratively execute steps S501 to S503 to generate an equivalent channel matrix $\tilde{\boldsymbol{H}}_u$ for each of the users. In an embodiment, the analog precoder $\boldsymbol{W}_{RFu}$ or the analog precoder $\boldsymbol{F}_{RF}$ may be different from the analog precoder generated according to the algorithm 300.

Specifically, in step S501, the wireless communication device may generate an equivalent channel matrix

$$\boldsymbol{H}_{equ} = \boldsymbol{W}_{RFu}^H \boldsymbol{H}_u \boldsymbol{F}_{RF}$$ according to the analog precoder $\boldsymbol{W}_{RFu}$, the channel matrix $\boldsymbol{H}_u$, and the analog precoder $\boldsymbol{F}_{RF}$.

In step S502, the wireless communication device may perform singular value decomposition $\boldsymbol{H}_{equ} = [\boldsymbol{U}_{equ1} \boldsymbol{U}_{equ2}] \boldsymbol{\Sigma}_{equ1}[\boldsymbol{V}_{equ1} \boldsymbol{V}_{equ2}]^H$ on the equivalent channel matrix $\boldsymbol{H}_{equ}$, where $\boldsymbol{\Sigma}_{equ1}$ is the diagonal matrix, $\boldsymbol{U}_{equ1}$ represents the first $n_{s,u}$ left singular vectors corresponding to the largest $n_{s,u}$ singular values, $\boldsymbol{U}_{equ2}$ represents the last ($N_{rRF}$ - $n_{s,u}$) left singular vectors corresponding to zero singular values, $\boldsymbol{\Sigma}_{equ1}$ is the diagonal matrix, $\boldsymbol{V}_{equ1}$ represents the first $n_{s,u}$ right singular vectors corresponding to the largest $n_{s,u}$ singular values, and $\boldsymbol{V}_{equ2}$ represents the last ($N_{tRF}$ - $n_{s,u}$) right singular vectors corresponding to zero singular values. $\boldsymbol{U}_{equ1}$ may be used to generate the digital precoder for the user u and other users (i.e., other users served by the satellite 100, such as user (u-1)).

In step S503, the wireless communication device may generate an equivalent channel matrix

$$\tilde{\boldsymbol{H}}_u = \boldsymbol{U}_{equ1}^H \boldsymbol{H}_{equ}$$ corresponding to the user u according to the matrix $\boldsymbol{U}_{equ1}$ and the equivalent channel matrix $\boldsymbol{H}_{equ}$, in which the equivalent channel matrix $\tilde{\boldsymbol{H}}_u$ may be used to generate the digital precoder for the user u and other users (i.e., other users served by the satellite 100).

After obtaining the equivalent channel matrix $\tilde{\boldsymbol{H}}_u$ for each of the users, the wireless communication device may iteratively execute steps S504 to S508 to generate a digital precoder $\boldsymbol{W}_{BBu}$ for each of the users, and generate a digital precoding matrix $\boldsymbol{F}_{BBu}$ for the u-th user for the satellite.

In step S504, the wireless communication device may define an equivalent channel matrix

$$\underline{\overline{\tilde{\boldsymbol{H}}}}_u = \left[\tilde{\boldsymbol{H}}_1^T, ..., \tilde{\boldsymbol{H}}_{u-1}^T, \tilde{\boldsymbol{H}}_{u+1}^T, \tilde{\boldsymbol{H}}_U^T\right]^T$$ for the user u. According to the above equation, the equivalent channel matrix

$\underline{\overline{\tilde{\boldsymbol{H}}}}_u$ of the user u is related to multiple equivalent channel matrices $\tilde{\boldsymbol{H}}_{u'}$ (u' ≠ u, i.e., $\tilde{\boldsymbol{H}}_{u'}$ is different from $\tilde{\boldsymbol{H}}_u$) of multiple other

users served by the satellite 100, and the equivalent channel matrix $\underline{\overline{\tilde{\boldsymbol{H}}}}_u$ of the user u may not include the equivalent

channel matrix $\tilde{\boldsymbol{H}}_u$ of the user u. For example, assuming there are 4 users (i.e., U = 4), the equivalent channel matrix

$$\underline{\overline{\tilde{\boldsymbol{H}}}}_3 = \left[\tilde{\boldsymbol{H}}_1 \; \tilde{\boldsymbol{H}}_2 \; \tilde{\boldsymbol{H}}_4\right]$$ corresponding to the third user may include the equivalent channel matrix $\tilde{\boldsymbol{H}}_1$ corresponding to

the first user, the equivalent channel matrix $\tilde{\boldsymbol{H}}_2$ corresponding to the second user, and the equivalent channel matrix $\tilde{\boldsymbol{H}}_4$ corresponding to the fourth user, without including the equivalent channel matrix $\tilde{\boldsymbol{H}}_3$ corresponding to the third user.

In step S505, the wireless communication device performs singular value decomposition

$$\underline{\overline{\tilde{\boldsymbol{H}}}}_u = \breve{U}_u \tilde{\boldsymbol{\Sigma}}_u \left[\breve{V}_{u1} \breve{V}_{u2}\right]^H$$ on the equivalent channel matrix $\underline{\overline{\tilde{\boldsymbol{H}}}}_u$, where $\breve{U}_u$ is the matrix of left singular vectors,

$\tilde{\boldsymbol{\Sigma}}_u$ is the diagonal matrix, $\breve{V}_{u1}$ represents the first ( $rank\left(\underline{\overline{\tilde{\boldsymbol{H}}}}_u\right)$ ) right singular vectors corresponding to the largest (

$rank\left(\underline{\overline{\tilde{\boldsymbol{H}}}}_u\right)$ ) singular values, and $\breve{V}_{u2}$ represents the last ( $N_{tRF} - rank\left(\underline{\overline{\tilde{\boldsymbol{H}}}}_u\right)$ ) right singular vectors corresponding to zero singular values, where $rank\left(\underline{\overline{\tilde{\boldsymbol{H}}}}_u\right)$ is the rank of the equivalent channel matrix $\underline{\overline{\tilde{\boldsymbol{H}}}}_u$.

In step S506, the wireless communication device may generate an equivalent channel matrix $\tilde{\boldsymbol{H}}_u \breve{V}_{u2}$ according to the matrix $\breve{V}_{u2}$ and the equivalent channel matrix $\tilde{\boldsymbol{H}}_u$, and perform singular value decomposition

$$\tilde{\boldsymbol{H}}_u \breve{V}_{u2} = \hat{U}_u \hat{\boldsymbol{\Sigma}}_u \hat{V}_u^H = [\hat{U}_{u1} \; \hat{U}_{u2}] \hat{\boldsymbol{\Sigma}}_u [\hat{V}_{u1} \; \hat{V}_{u2}]^H$$ on the equivalent channel matrix $\tilde{\boldsymbol{H}}_u \breve{V}_{u2}$, where $\hat{U}_{u1}$ repre-

sents the first ($rank(\tilde{H}_u\breve{V}_{u2})$) left singular vectors corresponding to the largest ($rank(\tilde{H}_u\breve{V}_{u2})$) singular values (or the first $n_{s,u}$ left singular vectors corresponding to the largest $n_{s,u}$ singular values), $\hat{U}_{u2}$ represents the last ($n_{s,u}$ - $rank(\tilde{H}_u\breve{V}_{u2})$) left singular vectors corresponding to ($n_{s,u}$ - $rank(\tilde{H}_u\breve{V}_{u2})$) singular values, $\hat{\boldsymbol{\Sigma}}_u$ represents the diagonal matrix, $\hat{V}_{u1}$ represents the first ($rank((\tilde{H}_u\breve{V}_{u2}))$) right singular vectors corresponding to the largest ($rank(\tilde{H}_u\breve{V}_{u2})$) singular values (or the first $n_{s,u}$

right singular vectors corresponding to the largest $n_{s,u}$ singular values), and $\hat{V}_{u2}$ represents the last (

$N_{tRF} - rank\left(\overline{\overline{H}}_u\right) - \quad rank(\tilde{H}_u\tilde{V}_{u2}))$ right singular vectors corresponding to (

$N_{tRF} - rank\left(\overline{\overline{H}}_u\right) - rank\left(\tilde{H}_u\tilde{V}_{u2}\right)$ ) zero singular values, where $rank(\tilde{H}_u\tilde{V}_{u2})$ is the rank of the equivalent channel matrix $\tilde{H}_u\tilde{V}_{u2}$.

In step S507, the wireless communication device may generate a digital precoding matrix $F_{BBu} = \tilde{V}_{u2}\tilde{V}_{u1}$ for the satellite 100 for the user u according to the matrices $\tilde{V}_{u2}$ and $\tilde{V}_{u1}$. The digital precoding matrix $F_{BBu}$ may be used to compose the digital precoder $F_{BB} = [F_{BB1}, F_{BB2}, ... , F_{BBU}]$ of the satellite 100.

In step S508, the wireless communication device may generate a digital precoder $W_{BBu} = U_{equ1}\hat{U}_{u1}$ for the user u according to the matrix $\hat{U}_{u1}$ and the equivalent channel matrix $U_{equ1}$.

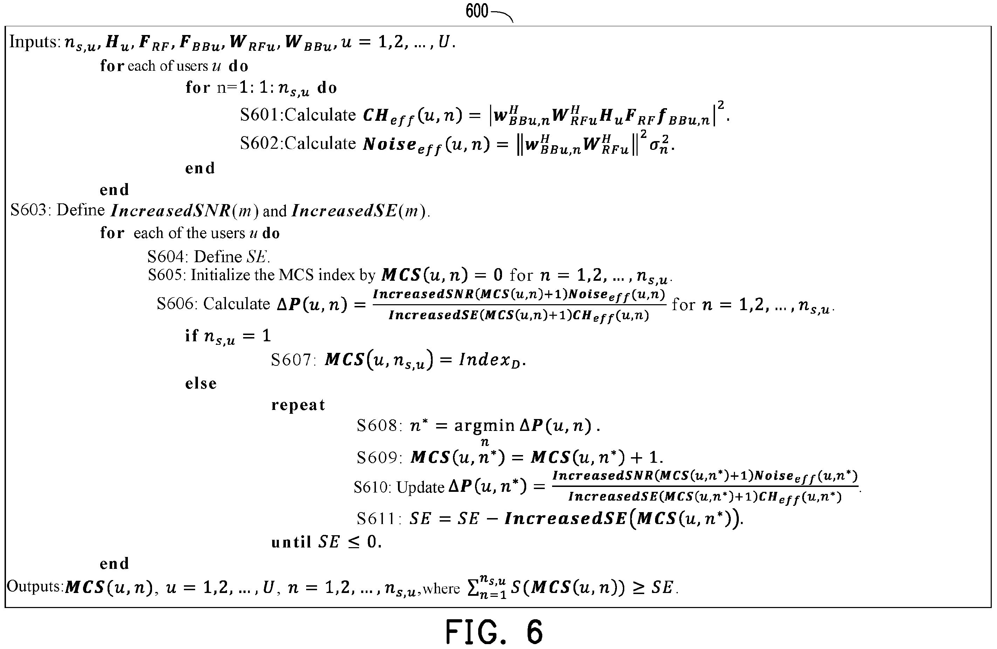

FIG. 6 illustrates a schematic diagram of an algorithm 600 for configuring a modulation coding scheme (MCS) according to an embodiment of the disclosure. The wireless communication device may obtain precoding information for hybrid beamforming and a channel matrix $H_u$ corresponding to a user u, in which the precoding information may include an analog precoder $W_{RFu}$ and a digital precoder $W_{BBu}$ for the user u, and a digital precoder $F_{BB} = [F_{BB1}, F_{BB2}, ... , F_{BBU}]$ and an analog precoder $F_{RF}$ for the satellite 100. The wireless communication device may configure an MCS for the baseband data stream signal of the user u according to the precoding information and the channel matrix $H_u$. In an embodiment, the precoder $W_{RFu}$, $W_{BBu}$, $F_{RF}$ or $F_{BB}$ may be different from the precoder generated according to the algorithm 300 or algorithm 500. For example, in the embodiment of FIG. 6, the digital precoder $W_{BBu}$ or $F_{BB}$ may include a zero forcing precoder.

The wireless communication device may iteratively execute steps S601 to S602 to calculate a channel matrix gain and a noise gain for each of baseband data stream signals of each of users according to the precoding information and the channel matrix $H_u$.

In step S601, the wireless communication device may calculate a channel matrix gain $CH_{eff}(u, n)$ corresponding to the nth baseband data stream signal of the user u, as shown in equation (2), where $w_{BBu,n}$ represents the digital precoding vector corresponding to the nth baseband data stream signal of the user u, $f_{BBu,n}$ represents the digital precoding vector of the satellite 100 for the nth baseband data stream signal of the user u.

$$CH_{eff}(u, n) = \left|w_{BBu,n}^H W_{RFu}^H H_u F_{RF} f_{BBu,n}\right|^2 \qquad (2)$$

In step S602, the wireless communication device may calculate a noise gain $Noise_{eff}(u, n)$ corresponding to the nth baseband data stream signal of the user u, as shown in equation (3), where $\sigma_n$ represents the standard deviation of additive white Gaussian noise (AWGN).

$$Noise_{eff}(u, n) = \left\|w_{BBu,n}^H W_{RFu}^H\right\|^2 \sigma_n^2 \qquad (3)$$

After calculating the channel matrix gain $CH_{eff}(u, n)$ and the noise gain $Noise_{eff}(u, n)$ for each of the baseband data stream signals of each of the users, in step S603, the wireless communication device may define **IncreasedSNR**(m) and **IncreasedSE**(m), in which **IncreasedSNR**(m) is the increased required SNR when switching the MCS of the baseband data stream from MCS (m-1) to MCS m, and **IncreasedSE**(m) is the increased required spectral efficiency when switching the MCS of the baseband data stream signal from MCS (m-1) to MCS m, where (m-1) or m is the index of the MCS, and m is a positive integer greater than or equal to 2. When the value of the MCS index increases, it represents an increase in the spectral efficiency of the MCS, and also represents an increase in the required SNR to achieve the expected frame error rate (FER) using the MCS.

Specifically, the wireless communication device may store a lookup table in a storage medium, and the lookup table may include mapping relationships among the MCS, the spectral efficiency, and the required signal-to-noise ratio (SNR). The wireless communication device may obtain information of **IncreasedSNR**(m) and **IncreasedSE**(m) from the lookup table. Taking the lookup table shown in Table 2 as an example, assuming m=2, the wireless communication device may calculate the difference between the spectral efficiency of MCS 2 at 0.8 bits per second/Hertz (bps/Hz) and the spectral efficiency of MCS 1 at 0.5 bps/Hz according to the lookup table to obtain **IncreasedSE**(2)=0.3 bps/Hz. In addition, the wireless communication device may calculate the difference between the required SNR of -0.22 decibels (dB) to achieve FER=10^{-5} using the MCS 2 and the required SNR of -2.19 dB to achieve FER=10^{-5} using the MCS 1 according to the lookup table to obtain $\textbf{\textit{IncreasedSNR}}(2) = \left(10^{\frac{-0.22}{10}}\right) - \left(10^{\frac{-2.19}{10}}\right) = $ 0.9506 - 0.6039 = 0.3467.

The wireless communication device iteratively executes steps S604 to S611 to configure an appropriate MCS for each of the baseband data stream signals of each of the users, thereby minimizing the total transmission power of the satellite 100 without affecting the quality of service.

In step S604, the wireless communication device may configure an initial value for a variable SE, in which SE is the preset value that the sum of spectral efficiencies of all baseband data stream signals for each of the users needs to achieve. The preset value SE may be customized by the user according to requirements. For example, the user may define SE=3.7037. SE=3.7037 represents that the sum of spectral efficiencies of all baseband data stream signals for each of the users served by the satellite 100 needs to reach 3.7037 bps/Hz.

In step S605, the wireless communication device may initialize the MCS of each of the baseband data streams for the user u, setting the index $MCS(u, n) = 0$. In other words, the wireless communication device may assume that no MCS is configured for each of the baseband data stream signals of the user u.

In step S606, the wireless communication device may calculate a power change $\Delta P(u, n)$ for improving the MCS (e.g., increasing the value of the MCS index by 1, that is, increasing the spectral efficiency of the nth baseband data stream signal) for the nth baseband data stream signal of the user u based on the initial MCS index and the lookup table, as shown in equation (4).

$$\Delta P(u, n) = \frac{IncreasedSNR(MCS(u,n)+1)Noise_{eff}(u,n)}{IncreasedSE(MCS(u,n)+1)CH_{eff}(u,n)} \quad (4)$$

After completing step S606, the wireless communication device may adjust the MCS of one or more baseband data stream signals of one or more users according to the power change $\Delta P(u, n)$ to increase the spectral efficiency of the one or more baseband data stream signals.

Assuming the number of baseband data stream signals for the user u is 1 (i.e., $n_{s,u} = 1$), the wireless communication device may set the MCS index of the baseband data stream signal to a preset MCS index $index_D$ (i.e., $MCS(u, n_{s,u}) = Index_D$) in step S607. The MCS with the index $Index_D$ may satisfy the spectral efficiency requirement for the user allocated merely one baseband data stream signal. For example, if the minimum spectral efficiency requirement for the user is SE=3.7037 bps/Hz, then $Index_D$ may equal MCS 10 (i.e., 32APSK) as shown in Table 2. If the MCS index of the user's baseband data stream signal is configured as 9 (i.e., 16APSK), the spectral efficiency of the user is not able to meet 3.7037 bps/Hz.

On the other hand, if the number of baseband data stream signals for the user u is greater than 1, the wireless communication device may repeatedly execute steps S608 to S611 to gradually adjust the MCS of one or more baseband data stream signals until the sum of spectral efficiencies of all baseband data stream signals for the user u reaches the preset value SE. After the sum of spectral efficiencies for the user u reaches the preset value SE, the wireless communication device may update the MCS of the baseband data stream signals for the user u.

In step S608, the wireless communication device may select the $n*$th baseband data stream signal from $n_{s,u}$ baseband data stream signals of the user u, such that a power change $\Delta P(u, n*)$ is minimized, as shown in equation (5). In other words, compared to the power required to increase the spectral efficiencies of other baseband data stream signals, the power required to increase the spectral efficiency of the $n*$th baseband data stream signal is less.

$$n^* = \operatorname*{argmin}_{n} \Delta P(u, n) \quad (5)$$

In step S609, the wireless communication device may increase the index value of the MCS for the $n*$th baseband data stream signal by 1, such that $MCS(u, n*) = MCS(u, n*) + 1$. After updating the MCS of the $n*$th baseband data stream signal, the spectral efficiency of the $n*$th baseband data stream signal increases.

In step S610, the wireless communication device may update the power change $\Delta P(u, n*)$ according to the updated MCS index $MCS(u, n*)$, as shown in equation (6).

$$\Delta P(u, n^*) = \frac{IncreasedSNR(MCS(u,n^*)+1)Noise_{eff}(u,n^*)}{IncreasedSE(MCS(u,n^*)+1)CH_{eff}(u,n^*)} \quad (6)$$

In step S611, the wireless communication device may update the preset value SE according to the updated MCS index $MCS(u, n*)$, such that $SE = SE\text{-}IncreasedSE(MCS(u, n*))$. The wireless communication device may repeatedly execute steps S608 to S611 until the updated $SE \leq 0$ (i.e., the sum of spectral efficiencies of all baseband data stream signals for the user u reaches the initial preset value SE, for example, reaching 3.7037 bps/Hz), as shown in equation (7), where $S(MCS(u, n))$ is the spectral efficiency of the nth baseband data stream signal of the user u.

$$\sum_{n=1}^{n_{s,u}} S\big(MCS(u, n)\big) \geq SE \quad (7)$$

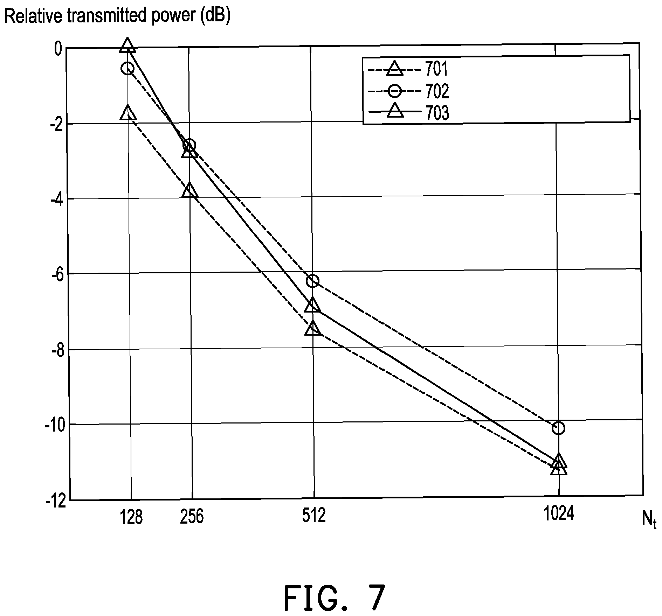

FIG. 7 illustrates simulation results of wireless communication performance according to an embodiment of the disclosure. The simulation in FIG. 7 assumes a system bandwidth of 54 MHz, and each of users needs to achieve a data rate of 200 Mbps at FER = $10^{-5}$. Curve 701 represents the relative transmitted power of a hybrid beamforming system using the algorithms 300, 500, and 600 of the disclosure. Curve 702 represents the relative transmitted power of a hybrid beamforming system without using the method of the disclosure. Curve 703 represents the relative transmitted power of a fully-digital block diagonalization system without using the method of the disclosure. From the simulation results, it may be known that compared to conventional methods, the method of the disclosure may reduce transmission power by about 20%.

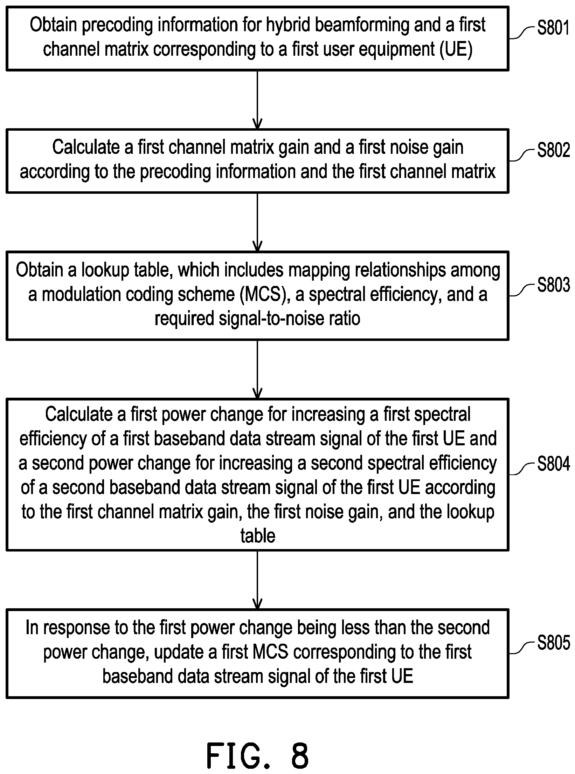

FIG. 8 illustrates a flowchart of a method of configuring a radio resource in satellite communication according to an embodiment of the disclosure, in which the method may be implemented by the wireless communication device, satellite 100, or UE 200 of the disclosure. In step S801, precoding information for hybrid beamforming and a first channel matrix corresponding to a first user equipment (UE) are obtained. In step S802, a first channel matrix gain and a first noise gain are calculated according to the precoding information and the first channel matrix. In step S803, a lookup table is obtained, and the lookup table includes mapping relationships among a modulation coding scheme (MCS), a spectral efficiency, and a required signal-to-noise ratio (SNR). In step S804, a first power change for increasing a first spectral efficiency of a first baseband data stream signal of the first UE and a second power change for increasing a second spectral efficiency of a second baseband data stream signal of the first UE are calculated according to the first channel matrix gain, the first noise gain, and the lookup table. In step S805, in response to the first power change being less than the second power change, a first MCS corresponding to the first baseband data stream signal of the first UE is updated.

In summary, the satellite communication system of the disclosure may include one or more satellites and one or more wireless communication devices such as UE. The wireless communication device may include an analog precoder and a digital precoder for hybrid beamforming. The satellite communication system may configure the analog precoder for each of the wireless communication devices. In the case where the satellite can provide a limited baseband data stream, the satellite communication system may allocate an appropriate number of the baseband data streams to the UE based on the communication quality of the UE. The UE with poorer communication quality may be allocated more baseband data streams to ensure the quality of service of the UE.

After completing the design of the analog precoders and the allocation of the number of the baseband data streams for the satellite and the UE, the satellite communication system may generate digital precoders for the satellite and the UE to improve inter-interference between the UE and intra-interference between data streams.

After completing the design of the precoders and the allocation of the number of the baseband data streams, for the UE allocated with multiple baseband data streams, the satellite communication system may calculate the power required to improve the MCS of each of the baseband data streams. The satellite communication system may gradually improve the MCS of the baseband data stream corresponding to the minimum power change until the spectral efficiencies of all baseband data streams of the UE meet the user requirements. Accordingly, the satellite communication system may improve the communication quality of the UE while minimizing the transmission power.

It will be apparent to those skilled in the art that various modifications and variations can be made to the disclosed embodiments. It is intended that the specification and examples be considered as exemplars only, with a true scope of the disclosure being indicated by the following claims and their equivalents.

**Claims**

1. A method of configuring a radio resource in satellite communication, comprising:

    obtaining precoding information for hybrid beamforming and a first channel matrix corresponding to a first user equipment (S801);
    calculating a first channel matrix gain and a first noise gain according to the precoding information and the first channel matrix (S802);
    obtaining a lookup table, wherein the lookup table comprises mapping relationships among a modulation coding scheme, a spectral efficiency, and a required signal-to-noise ratio (S803);
    calculating a first power change for increasing a first spectral efficiency of a first baseband data stream signal of the first user equipment and a second power change for increasing a second spectral efficiency of a second baseband data stream signal of the first user equipment according to the first channel matrix gain, the first noise gain, and the lookup table (S804); and
    in response to the first power change being less than the second power change, updating a first modulation coding scheme corresponding to the first baseband data stream signal of the first user equipment (S805).

2. The method according to claim 1, wherein updating the first modulation coding scheme corresponding to the first baseband data stream signal of the first user equipment comprises:
increasing a first spectral efficiency corresponding to the first baseband data stream signal of the first user equipment.

3. The method according to claim 2, further comprising:

calculating a sum of a plurality of spectral efficiencies, wherein the plurality of spectral efficiencies respectively correspond to a plurality of baseband data stream signals of the first user equipment; and
in response to the sum reaching a preset value, stopping an update of a plurality of modulation coding schemes respectively corresponding to the plurality of baseband data stream signals.

4. The method according to claim 1, wherein the precoding information comprises a digital precoder and an analog precoder of a satellite (100), and comprises a digital precoder and an analog precoder of the first user equipment.

5. The method according to claim 1, further comprising:

allocating at least one baseband data stream signal for each of a plurality of user equipments (200), wherein the plurality of user equipments (200) comprises the first user equipment, and the at least one baseband data stream signal comprises the first baseband data stream signal;
performing singular value decomposition respectively on a plurality of equivalent channel matrices to obtain a singular value set (400), wherein the plurality of equivalent channel matrices respectively correspond to the plurality of user equipments (200);
removing a plurality of maximum singular values respectively corresponding to the plurality of equivalent channel matrices from the singular value set (400) to update the singular value set (400); and
allocating the second baseband data stream signal for the first user equipment according to the singular value set (400) updated.

6. The method according to claim 5, wherein allocating the second baseband data stream signal for the first user equipment according to the singular value set (400) updated comprises:

selecting a plurality of maximum singular values respectively corresponding to the plurality of user equipments (200) from the singular value set (400) updated;
determining whether a first singular value corresponding to the first user equipment is the smallest among the plurality of maximum singular values selected;
in response to determining that the first singular value is the smallest, allocating the second baseband data stream signal for the first user equipment; and
removing the first singular value from the singular value set (400) to update the singular value set (400).

7. The method according to claim 5, further comprising:

determining a number $n_{s,u}$ of baseband data streams allocated to the first user equipment according to the singular value set (400), where $n_{s,u}$ is a positive integer;
calculating an equivalent channel matrix according to an analog precoder of the first user equipment and the first channel matrix;
performing singular value decomposition on the equivalent channel matrix to obtain first $n_{s,u}$ right singular vectors; and
generating an analog precoder of a satellite (100) according to the first $n_{s,u}$ right singular vectors.

8. The method according to claim 1, further comprising:

performing singular value decomposition on the first channel matrix to obtain first $N_{rRF}$ left singular vectors, where $N_{rRF}$ is a positive integer; and
generating an analog precoder of the first user equipment according to the first $N_{rRF}$ left singular vectors.

9. The method according to claim 1, wherein the precoding information comprises an analog precoder of a satellite (100) and an analog precoder of the first user equipment, and the method further comprises:

calculating a first equivalent channel matrix according to the first channel, the analog precoder of the satellite (100), and the analog precoder of the first user equipment;

performing singular value decomposition on the first equivalent channel matrix to obtain first $n_{s,u}$ left singular vectors, where $n_{s,u}$ is a number of baseband data stream signals allocated to the first user equipment, and $n_{s,u}$ is a positive integer; and

generating a digital precoder of a second user equipment according to the first $n_{s,u}$ left singular vectors.

10. The method according to claim 9, wherein generating the digital precoder of the second user equipment according to the first $n_{s,u}$ left singular vectors comprises:

generating a second equivalent channel matrix according to the first $n_{s,u}$ left singular vectors and the first equivalent channel matrix;

generating a third equivalent channel matrix, wherein the third equivalent channel matrix comprises a plurality of equivalent channel matrices different from a fourth equivalent channel matrix, and the fourth equivalent channel matrix corresponds to the second user equipment;

performing singular value decomposition on the third equivalent channel matrix to obtain last ( $N_{tRF} - rank\left(\overline{\overline{\widetilde{\underline{H}}}}_u\right)$ ) right singular vectors, where $N_{tRF}$ is a number of radio frequency chains of the satellite, and $rank\left(\overline{\overline{\widetilde{\underline{H}}}}_u\right)$ is rank of the third equivalent channel matrix;

generating a fifth equivalent channel matrix according to the last ( $N_{tRF} - rank\left(\overline{\overline{\widetilde{\underline{H}}}}_u\right)$ ) right singular vectors and the second equivalent channel matrix;

performing singular value decomposition on the fifth equivalent channel matrix to obtain first $n_{s,u}$ second left singular vectors, where $n_{s,u}$ is a number of baseband data stream signals allocated to the first user equipment, and $n_{s,u}$ is a positive integer; and

generating the digital precoder of the second user equipment according to the first $n_{s,u}$ left singular vectors and the first $n_{s,u}$ second left singular vectors.

11. The method according to claim 10, further comprising:

performing the singular value decomposition on the fifth equivalent channel matrix to obtain first $n_{s,u}$ right singular vectors; and

generating a digital precoder of the satellite (100) according to the last ( $N_{tRF} - rank\left(\overline{\overline{\widetilde{\underline{H}}}}_u\right)$ ) right singular vectors and the first $n_{s,u}$ right singular vectors.

12. A wireless communication device of configuring a radio resource in satellite communication, comprising:

a processor (110, 210);
a digital precoding circuit (120, 220), coupled to the processor (110, 210);
a plurality of radio frequency chains (130, 230), coupled to the digital precoding circuit (120, 220); and
an analog precoding circuit (140, 240), coupled to the plurality of radio frequency chains (130, 230), wherein the processor (110, 210) is configured to execute:

obtaining precoding information for hybrid beamforming and a first channel matrix corresponding to a first user equipment (S801);
calculating a first channel matrix gain and a first noise gain according to the precoding information and the first channel matrix (S802);
obtaining a lookup table, wherein the lookup table comprises mapping relationships among a modulation coding scheme, a spectral efficiency, and a required signal-to-noise ratio (S803);
calculating a first power change for increasing a first spectral efficiency of a first baseband data stream signal of the first user equipment and a second power change for increasing a second spectral efficiency of a second baseband data stream signal of the first user equipment according to the first channel matrix gain, the first noise gain, and the lookup table (S804); and
in response to the first power change being less than the second power change, updating a first modulation coding scheme corresponding to the first baseband data stream signal of the first user equipment (S805).

13. The wireless communication device according to claim 12, wherein the wireless communication device comprises one of a satellite (100) and the first user equipment.

**Amended claims in accordance with Rule 137(2) EPC.**

1. A method of configuring a radio resource in satellite communication, suitable for a satellite (100) or a first user equipment, **characterizing in** comprising:

   obtaining precoding information for hybrid beamforming and a first channel matrix corresponding to the first user equipment (S801);
   calculating a first channel matrix gain and a first noise gain according to the precoding information and the first channel matrix (S802);
   obtaining a lookup table, wherein the lookup table comprises mapping relationships among a modulation coding scheme, a spectral efficiency, and a required signal-to-noise ratio (S803);
   calculating a first power change for increasing a first spectral efficiency of a first baseband data stream signal of the first user equipment and a second power change for increasing a second spectral efficiency of a second baseband data stream signal of the first user equipment according to the first channel matrix gain, the first noise gain, and the lookup table (S804); and
   in response to the first power change being less than the second power change, updating a first modulation coding scheme corresponding to the first baseband data stream signal of the first user equipment (S805).

2. The method according to claim 1, wherein updating the first modulation coding scheme corresponding to the first baseband data stream signal of the first user equipment comprises:
   increasing a first spectral efficiency corresponding to the first baseband data stream signal of the first user equipment.

3. The method according to claim 2, further comprising:

   calculating a sum of a plurality of spectral efficiencies, wherein the plurality of spectral efficiencies respectively correspond to a plurality of baseband data stream signals of the first user equipment; and
   in response to the sum reaching a preset value, stopping an update of a plurality of modulation coding schemes respectively corresponding to the plurality of baseband data stream signals.

4. The method according to claim 1, wherein the precoding information comprises a digital precoder and an analog precoder of a satellite (100), and comprises a digital precoder and an analog precoder of the first user equipment.

5. The method according to claim 1, further comprising:

   allocating at least one baseband data stream signal for each of a plurality of user equipments (200), wherein the plurality of user equipments (200) comprises the first user equipment, and the at least one baseband data stream signal comprises the first baseband data stream signal;
   performing singular value decomposition respectively on a plurality of equivalent channel matrices to obtain a singular value set (400), wherein the plurality of equivalent channel matrices respectively correspond to the plurality of user equipments (200);
   removing a plurality of maximum singular values respectively corresponding to the plurality of equivalent channel matrices from the singular value set (400) to update the singular value set (400); and
   allocating the second baseband data stream signal for the first user equipment according to the singular value set (400) updated.

6. The method according to claim 5, wherein allocating the second baseband data stream signal for the first user equipment according to the singular value set (400) updated comprises:

   selecting a plurality of maximum singular values respectively corresponding to the plurality of user equipments (200) from the singular value set (400) updated;
   determining whether a first singular value corresponding to the first user equipment is the smallest among the plurality of maximum singular values selected;
   in response to determining that the first singular value is the smallest, allocating the second baseband data stream signal for the first user equipment; and
   removing the first singular value from the singular value set (400) to update the singular value set (400).

7. The method according to claim 5, further comprising:

determining a number $n_{s,u}$ of baseband data streams allocated to the first user equipment according to the singular value set (400), where $n_{s,u}$ is a positive integer;
calculating an equivalent channel matrix according to an analog precoder of the first user equipment and the first channel matrix;
performing singular value decomposition on the equivalent channel matrix to obtain first $n_{s,u}$ right singular vectors; and
generating an analog precoder of a satellite (100) according to the first $n_{s,u}$ right singular vectors.

8. The method according to claim 1, further comprising:

performing singular value decomposition on the first channel matrix to obtain first $N_{rRF}$ left singular vectors, where $N_{rRF}$ is a positive integer; and
generating an analog precoder of the first user equipment according to the first $N_{rRF}$ left singular vectors.

9. The method according to claim 1, wherein the precoding information comprises an analog precoder of a satellite (100) and an analog precoder of the first user equipment, and the method further comprises:

calculating a first equivalent channel matrix according to the first channel, the analog precoder of the satellite (100), and the analog precoder of the first user equipment;
performing singular value decomposition on the first equivalent channel matrix to obtain first $n_{s,u}$ left singular vectors, where $n_{s,u}$ is a number of baseband data stream signals allocated to the first user equipment, and $n_{s,u}$ is a positive integer; and
generating a digital precoder of a second user equipment according to the first $n_{s,u}$ left singular vectors.

10. The method according to claim 9, wherein generating the digital precoder of the second user equipment according to the first $n_{s,u}$ left singular vectors comprises:

generating a second equivalent channel matrix according to the first $n_{s,u}$ left singular vectors and the first equivalent channel matrix;
generating a third equivalent channel matrix, wherein the third equivalent channel matrix comprises a plurality of equivalent channel matrices different from a fourth equivalent channel matrix, and the fourth equivalent channel matrix corresponds to the second user equipment;
performing singular value decomposition on the third equivalent channel matrix to obtain last (

$$ N_{tRF} - rank\left(\overline{\overline{\underline{H}}}_u\right) $$

) right singular vectors, where $N_{tRF}$ is a number of radio frequency chains of the satellite, and *rank* (

$$ \left(\overline{\overline{\underline{H}}}_u\right) $$

is rank of the third equivalent channel matrix;
generating a fifth equivalent channel matrix according to the last (

$$ N_{tRF} - rank\left(\overline{\overline{\underline{H}}}_u\right) $$

) right singular vectors and the second equivalent channel matrix;
performing singular value decomposition on the fifth equivalent channel matrix to obtain first $n_{s,u}$ second left singular vectors, where $n_{s,u}$ is a number of baseband data stream signals allocated to the first user equipment, and $n_{s,u}$ is a positive integer; and
generating the digital precoder of the second user equipment according to the first $n_{s,u}$ left singular vectors and the first $n_{s,u}$ second left singular vectors.

11. The method according to claim 10, further comprising:

performing the singular value decomposition on the fifth equivalent channel matrix to obtain first $n_{s,u}$ right singular vectors; and
generating a digital precoder of the satellite (100) according to the last (

$$N_{tRF} - rank\left(\overline{\overline{\underline{H}}}_u\right)$$

) right singular vectors and the first $n_{s,u}$ right singular vectors.

12. A wireless communication device of configuring a radio resource in satellite communication, comprising:

a processor (110, 210);
a digital precoding circuit (120, 220), coupled to the processor (110, 210);
a plurality of radio frequency chains (130, 230), coupled to the digital precoding circuit (120, 220); and
an analog precoding circuit (140, 240), coupled to the plurality of radio frequency chains (130, 230), **characterizing in** the processor (110, 210) configured to execute:

obtaining precoding information for hybrid beamforming and a first channel matrix corresponding to a first user equipment (S801);
calculating a first channel matrix gain and a first noise gain according to the precoding information and the first channel matrix (S802);
obtaining a lookup table, wherein the lookup table comprises mapping relationships among a modulation coding scheme, a spectral efficiency, and a required signal-to-noise ratio (S803);
calculating a first power change for increasing a first spectral efficiency of a first baseband data stream signal of the first user equipment and a second power change for increasing a second spectral efficiency of a second baseband data stream signal of the first user equipment according to the first channel matrix gain, the first noise gain, and the lookup table (S804); and
in response to the first power change being less than the second power change, updating a first modulation coding scheme corresponding to the first baseband data stream signal of the first user equipment (S805), wherein the wireless communication device comprises one of a satellite (100) or the first user equipment.

FIG. 1

S201 — Configure an analog precoder of a satellite and a user equipment (UE), and allocate the number of baseband data stream signals to each of the UE

S202 — Configure a digital precoder of the satellite and the UE

S203 — Configure a modulation coding scheme (MCS) for each of baseband data stream signals of the UE

FIG. 2

Inputs: $H_u$, $u$ $(u = 1, \ldots, U)$, $N_{rRF}$, $N_{tRF}$, $N_r$, $N_t$.

    **for** each of users $u$ **do**

        S301 Calculate the SVD of $H_u = \bar{U}_u \bar{\Sigma}_u \bar{V}_u^H$.

        S302 Calculate $W_{RFu} = \frac{1}{\sqrt{N_r}} e^{j\angle \bar{U}_u(1:N_r,1:N_{rRF})}$, where $\bar{U}_u(1:N_r, 1:N_{rRF})$ Is the first $N_{rRF}$ left singular vectors corresponding to the largest $N_{rRF}$ singular values.

        S303 Calculate the SVD of $W_{RFu}^H H_u = \bar{\bar{U}}_u \bar{\bar{\Sigma}}_u \bar{\bar{V}}_u^H$.

    **end**

    S304 Allocate one baseband data stream signal ($n_{s,u} = 1$, $u = 1,2,\ldots,U$) to all UE served.

    **repeat**

        S305: $u^* = \underset{u \in C}{\arg\min}\ \sigma_u^{(n_{s,u}+1)}$, where $C = \left\{u \middle| n_{s,u} < N_{rRF}, u \in \{1,2,\ldots,U\}\right\}$, and $\sigma_u^{(1)} \geq \sigma_u^{(2)} \geq \cdots \geq \sigma_u^{(rank(W_{RFu}^H H_u))}$ are singular values of $W_{RFu}^H H_u$.

        S306: $n_{s,u^*} = n_{s,u^*} + 1$.

    **until** $\sum_{u=1}^{U} n_{s,u} = N_{tRF}$.

    **for** each of users $u$ **do**

        S307 Calculate $F_{RFu} = \frac{1}{\sqrt{N_t}} e^{j\angle \bar{\bar{V}}_u(1:N_t,1:n_{s,u})}$, where $\bar{\bar{V}}_u\left(1:N_t, 1:n_{s,u}\right)$ Is the first $n_{s,u}$ right singular vectors corresponding to the largest $n_{s,u}$ singular values.

    **end**

    S308: $F_{RF} = [F_{RF1}, F_{RF2}, \ldots, F_{RFU}]$.

Outputs: $F_{RF}$, $n_{s,u}$, $W_{RFu}$, $u = 1,2,\ldots,U$.

EP 4 746 313 A1

# FIG. 3

User 1　　　　　　User 2　　　　　　User 3　　　　400 User 4

$$\sigma_1^{(1)} \qquad \sigma_2^{(1)} \qquad \sigma_3^{(1)} \qquad \sigma_4^{(1)}$$ 410

$$\sigma_1^{(2)}$$ 420 $$\qquad \sigma_2^{(2)} \qquad\quad \sigma_3^{(2)}$$ 440 $$\qquad \sigma_4^{(2)}$$

$$\sigma_1^{(3)}$$ 430 $$\qquad \sigma_2^{(3)} \qquad\quad \sigma_3^{(3)} \qquad\quad \sigma_4^{(3)}$$

# FIG. 4

**Inputs:** $n_{s,u}, H_u, W_{RFu}, F_{RF}, u = 1,2, \ldots, U$.

    **for** each of users $u$ **do**

        S501 Define $H_{equ} = W_{RFu}^H H_u F_{RF}$.

        S502 Calculate the SVD of $H_{equ} = \begin{bmatrix} U_{equ1} & U_{equ2} \end{bmatrix} \Sigma_{equ1} \begin{bmatrix} V_{equ1} & V_{equ2} \end{bmatrix}^H$, where $U_{equ1}$ is the first $n_{s,u}$ left singular vectors corresponding to the largest $n_{s,u}$ singular values.

        S503 Define $\widetilde{H}_u = U_{equ1}^H H_{equ}$.

    **end**

    **for** each of users $u$ **do**

        S504 Define $\overline{\widetilde{H}}_u = \begin{bmatrix} \widetilde{H}_1^T, \ldots, \widetilde{H}_{u-1}^T, \widetilde{H}_{u+1}^T, \widetilde{H}_U^T \end{bmatrix}^T$.

        S505 Calculate the SVD of $\overline{\widetilde{H}}_u = \widetilde{U}_u \widetilde{\Sigma}_u \begin{bmatrix} \widetilde{V}_{u1} & \widetilde{V}_{u2} \end{bmatrix}^H$ where $\widetilde{V}_{u2}$ is the last $N_{tRF} - rank\left(\overline{\widetilde{H}}_u\right)$ right singular vectors corresponding to zero singular values.

        S506 Calculate the SVD of $\widetilde{H}_u \widetilde{V}_{u2} = \widehat{U}_u \widehat{\Sigma}_u \widehat{V}_u^H = \begin{bmatrix} \widehat{U}_{u1} & \widehat{U}_{u2} \end{bmatrix} \widehat{\Sigma}_u \begin{bmatrix} \widehat{V}_{u1} & \widehat{V}_{u2} \end{bmatrix}^H$.

        S507 Calculate $F_{BBu} = \widetilde{V}_{u2} \widehat{V}_{u1}$.

        S508 Calculate $W_{BBu} = U_{equ1} \widehat{U}_{u1}$.

    **end**

**Outputs:** $F_{BB} = \begin{bmatrix} F_{BB1}, F_{BB2}, \ldots, F_{BBU} \end{bmatrix}, W_{BBu}, u = 1,2, \ldots, U$.

$$\text{FIG. 5}$$

Inputs: $n_{s,u}, \boldsymbol{H}_u, \boldsymbol{F}_{RF}, \boldsymbol{F}_{BBu}, \boldsymbol{W}_{RFu}, \boldsymbol{W}_{BBu}, u = 1,2, \dots, U.$

    **for** each of users $u$ **do**

        **for** n=1: 1: $n_{s,u}$ **do**

            S601:Calculate $\boldsymbol{CH}_{eff}(u, n) = \left| \boldsymbol{w}_{BBu,n}^H \boldsymbol{W}_{RFu}^H \boldsymbol{H}_u \boldsymbol{F}_{RF} \boldsymbol{f}_{BBu,n} \right|^2.$

            S602:Calculate $\boldsymbol{Noise}_{eff}(u, n) = \left\| \boldsymbol{w}_{BBu,n}^H \boldsymbol{W}_{RFu}^H \right\|^2 \sigma_n^2.$

        **end**

    **end**

S603: Define $IncreasedSNR(m)$ and $IncreasedSE(m)$.

    **for** each of the users $u$ **do**

        S604: Define $SE$.

        S605: Initialize the MCS index by $\boldsymbol{MCS}(u, n) = 0$ for $n = 1,2, \dots, n_{s,u}.$

        S606: Calculate $\Delta \boldsymbol{P}(u, n) = \dfrac{IncreasedSNR(MCS(u,n)+1)Noise_{eff}(u,n)}{IncreasedSE(MCS(u,n)+1)CH_{eff}(u,n)}$ for $n = 1,2, \dots, n_{s,u}.$

        **if** $n_{s,u} = 1$

            S607: $\boldsymbol{MCS}(u, n_{s,u}) = Index_D.$

        **else**

            **repeat**

                S608: $n^* = \underset{n}{\arg\min} \, \Delta \boldsymbol{P}(u, n).$

                S609: $\boldsymbol{MCS}(u, n^*) = \boldsymbol{MCS}(u, n^*) + 1.$

                S610: Update $\Delta \boldsymbol{P}(u, n^*) = \dfrac{IncreasedSNR(MCS(u,n^*)+1)Noise_{eff}(u,n^*)}{IncreasedSE(MCS(u,n^*)+1)CH_{eff}(u,n^*)}.$

                S611: $SE = SE - \boldsymbol{IncreasedSE}(\boldsymbol{MCS}(u, n^*)).$

            **until** $SE \leq 0.$

    **end**

Outputs: $\boldsymbol{MCS}(u, n), \ u = 1,2, \dots, U, \ n = 1,2, \dots, n_{s,u},$ where $\sum_{n=1}^{n_{s,u}} S(\boldsymbol{MCS}(u, n)) \geq SE.$

<p style="text-align:center"><strong>FIG. 6</strong></p>

EP 4 746 313 A1

Relative transmitted power (dB)

FIG. 7

Obtain precoding information for hybrid beamforming and a first channel matrix corresponding to a first user equipment (UE) — S801

Calculate a first channel matrix gain and a first noise gain according to the precoding information and the first channel matrix — S802

Obtain a lookup table, which includes mapping relationships among a modulation coding scheme (MCS), a spectral efficiency, and a required signal-to-noise ratio — S803

Calculate a first power change for increasing a first spectral efficiency of a first baseband data stream signal of the first UE and a second power change for increasing a second spectral efficiency of a second baseband data stream signal of the first UE according to the first channel matrix gain, the first noise gain, and the lookup table — S804

In response to the first power change being less than the second power change, update a first MCS corresponding to the first baseband data stream signal of the first UE — S805

# FIG. 8

Europäisches
Patentamt

European
Patent Office

Office européen
des brevets

# EUROPEAN SEARCH REPORT

**Application Number**

EP 25 16 6606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 184 807 A1 (HUAWEI TECH CO LTD [CN]) 24 May 2023 (2023-05-24) <br> * abstract * <br> * figure 15 * <br> * paragraph [0235] - paragraph [0258] * <br> ----- | 1-13 | INV. <br> H04B7/185 |
| A | US 2021/320698 A1 (SHARAFAT AHMAD REZA [IR] ET AL) 14 October 2021 (2021-10-14) <br> * abstract * <br> * page 13 * <br> * paragraph [0208] - paragraph [0225] * <br> ----- | 1-13 | |
| A | EP 2 562 952 A1 (RESEARCH IN MOTION LTD [CA]) 27 February 2013 (2013-02-27) <br> * figures 1A-1K * <br> * paragraph [0056] - paragraph [0101] * <br> * abstract * <br> ----- | 1-13 | |

**TECHNICAL FIELDS SEARCHED (IPC)**

H04B
H04W

The present search report has been drawn up for all claims

| Place of search | Date of completion of the search | Examiner |
|---|---|---|
| Munich | 28 August 2025 | Volpato, Andrea |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 16 6606

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2025

| Patent document cited in search report | | Publication date | Patent family member(s) | | Publication date |
|---|---|---|---|---|---|
| EP 4184807 | A1 | 24-05-2023 | CN | 113992256 A | 28-01-2022 |
| | | | EP | 4184807 A1 | 24-05-2023 |
| | | | WO | 2022022238 A1 | 03-02-2022 |
| US 2021320698 | A1 | 14-10-2021 | US | 2021320698 A1 | 14-10-2021 |
| | | | WO | 2021255713 A1 | 23-12-2021 |
| EP 2562952 | A1 | 27-02-2013 | CA | 2787662 A1 | 24-02-2013 |
| | | | EP | 2562952 A1 | 27-02-2013 |

EPO FORM P0459

For more details about this annex : see Official Journal of the European Patent Office, No. 12/82